# EUROPÄISCHE PATENTANMELDUNG

(11) **EP 0 615 872 A2**
(43) Veröffentlichungstag der Anmeldung: **21.09.1994**
(21) Anmeldenummer: 94102307.9
(22) Anmeldetag: 16.02.1994
(51) Int. Cl.: B60H 1/00

(54) **Kombinierter Kühl- und Heizprozess und Vorrichtung zur Klimatisierung eines Raumes**

(30) Priorität: 18.03.1993 DE 4308630
(71) Anmelder: HAGENUK FAHRZEUGKLIMA GmbH, D-04435 Schkeuditz (DE); NORMALAIR -GARRETT LIMITED, Yeovil, Somerset BA20 2YB (GB)
(72) Erfinder: Adolph, Ulrich, Dr.-Ing., D-04159 Leipzig (DE); Eichholz, Stefan, D-24148 Kiel (DE); Giles, George Richard, South Petherton, Somerset TA1B 5ER (GB); Richards, Donald James, Somerset (GB)
(74) Vertreter: Köckeritz, Günter

(57) **Zusammenfassung**

Die Erfindung betrifft einen kombinierten Kaltluftmaschinenkühl- und -heizprozeß zum Klimatisieren eines Raumes sowie eine Vorrichtung zur Durchführung des Verfahrens, insbesondere für den Einsatz in Fahrerkabinen von Lokomotiven u. ä. Räumen.
Beim erfindungsgemäßen Verfahren handelt es sich um einen kombinierten Kaltluftmaschinenkühl- und -heizprozeß, der im Unterdruckbereich arbeitet, zum Klimatisieren eines Raumes, insbesondere von Fahrerkabinen von Lokomotiven o.ä., wonach entweder gekühlt oder geheizt werden kann.

Wenn der Raum (5) nicht mehr gekühlt, sondern geheizt werden soll, werden erfindungsgemäß vier Ventile (6,7,8,9) umgeschaltet und der für den Sekundärkreislauf der Kühlung erforderliche Wärmeübertrager (4) wird von der Fortluft der Kabine durchströmt und arbeitet als Regenerator für den Heizprozeß.

## Beschreibung

Die Erfindung betrifft einen kombinierten Kaltluftmaschinenkühl- und -heizprozeß zum Klimatisieren eines Raumes sowie eine Vorrichtung zur Durchführung des Verfahrens, insbesondere für den Einsatz in Fahrerkabinen von Lokomotiven u. ä. Räumen.

Die ursprüngliche Aufgabe von Kaltluftmaschinen besteht in der Kühlung eines Raumes durch Nutzung der thermodynamischen Eigenschaften der Luft in einem Joule-Kreisprozeß.
Im Vergleich zu Kaltdampfmaschinen nach dem Carnot-Prozeß tritt im allgemeinen bei Kaltluftmaschinen ein deutlich höherer Energiebedarf auf, so daß ihre Anwendung auf Flugzeuge und bestimmte Spezialfälle beschränkt blieb. Ihre weitere Verbreitung deutet sich nunmehr an, da die Kältemittel der Kaltdampfmaschine z. T. erheblich zum Ozonabbau und zum Treibhauspotential beitragen. Da der Energieverbrauch der jeweiligen Anlage direkt proportional zum indirekten Treibhauspotential ist, muß es gelingen, die Kaltluftmaschine diesbezüglich zumindest gleichwertig zur Kaltdampfmaschine und der elektrischen Heizung in vergleichbaren Anwendungsfällen zu gestalten. Da im Kaltluftmaschinenprozeß auch Temperaturen oberhalb der Umgebungstemperaturen entstehen, wurden Lösungen zur gleichzeitigen oder alternativen Nutzung des Verfahrens zum Heizen und Kühlen erarbeitet, wodurch bedeutend günstigere energetische Verhältnisse erreicht werden können.
Dabei handelt es sich um eine Anlage mit zweistufiger Verdichtung in zwei getrennten Verdichtern, wobei der Verdichter der ersten Stufe durch einen Elektromotor und der der zweiten Stufe durch die Entspannungsturbine angetrieben werden. Beim Kühlvorgang wird ein geschlossener Primärkreislauf der Luft mit Zwischenkühlung und regenerativem Wärmeaustausch zwischen dem Verdichter der zweiten Stufe und der Entspannungsturbine verwirklicht. In einem Nutzwärmeübertrager nach der Entspannungsturbine erfolgt die Kühlung der Luft des Sekundärkreislaufes, die dann dem zu kühlenden Raum zugeführt wird.
Durch Anordnung von Umschaltventilen und Umgehungsleitungen entsteht ein offener Primärkreislauf, mit dem es gelingt, dem Nutzwärmeübertrager die nach der Verdichter entstehende warme Luft zuzuführen, so daß der Sekundärkreislauf zum Heizen des Raumes benutzt werden kann.
Der Vorteil dieser Lösung besteht darin, daß im Vergleich zur Heizung von Reisezugwagen mit elektrischen Widerstandsheizkörpern und Kühlung durch Kaltdampfmaschinen der Energieverbrauch im Jahresmittel erheblich gesenkt und der Wirkungsgrad der Anlage verbessert werden kann. Nachteilig bei dieser Lösung ist der verhältnismäßig große apparative Aufwand, der vor allem durch die zwei Verdichterstufen, den Nutzwärmeübertrager für den Sekundärkreislauf, die Umschaltventile und Umgehungsleitungen bestimmt wird.
Dadurch erweist sich diese energetisch günstige Ausführung als zu aufwendig für kleinere Räume, wie z. B. Fahrerkabinen von Lokomotiven oder Serviceabteile von Reisezugwagen.

Der Erfindung liegt die Aufgabe zugrunde, den apparativen Aufwand zu verringern, so daß das Verfahren und die Vorrichtung auch zum Klimatisieren von kleinen Räumen eingesetzt werden kann.

Erfindungsgemäß wird die Aufgabe durch die Merkmale der Ansprüche 1 und 3 gelöst. Eine vorteilhafte Weiterbildung der Erfindung ist im Unteranspruch 2 enthalten.

Beim erfindungsgemäßen Verfahren handelt es sich um einen kombinierten Kaltluftmaschinenkühl- und -heizprozeß, der im Unterdruckbereich arbeitet, zum Klimatisieren eines Raumes, insbesondere von Fahrerkabinen von Lokomotiven o. ä., wonach entweder gekühlt oder geheizt werden kann.

Wenn der Raum nicht mehr gekühlt, sondern geheizt werden soll, werden erfindungsgemäß vier Ventile umgeschaltet und der für den Sekundärkreislauf der Kühlung erforderliche Wärmeübertrager wird von der Fortluft der Kabine durchströmt und arbeitet als Regenerator für den Heizprozeß.
Die vom Verdichter erwärmte Luft gelangt zunächst über eine Verbindungsleitung zur Kabine und von da als Abluft über den Regenerator ins Freie. Bei diesem Verfahren wird die gesamte, von der Turbine aus der Umgebung angesaugte Luft als erwärmte Frischluft zur Beheizung der Kabine genutzt.
Ein bevorzugtes Merkmal der Erfindung besteht darin, daß für den Fall des Vorheizbetriebes der kalten Kabine mit unveränderter Schaltung gegenüber dem normalen Heizbetrieb gearbeitet werden kann, lediglich der Regler ist auf maximale Leistungsstufe einzustellen.
Die Erfindung beinhaltet weiterhin eine Vorrichtung zur Durchführung des Verfahrens. Dabei handelt es sich um eine Vorrichtung, die aus einer motorgetriebenen Verdichter-Turbineneinheit mit zwischengeschaltetem Wärmeübertrager für die Kühlung der Zuluft des zu klimatisierenden Raumes und entsprechenden Verbindungsleitungen besteht. Zwischen Verdichteraustritt und Kabine befindet sich ein Umschaltventil mit einer Verbindungsleitung und vor und nach dem Wärmeübertrager zwei weitere Umschaltventile mit Öffnungsmöglichkeit der Leitungen zur Umgebung.

Der Vorteil der Erfindung besteht darin, daß im Vergleich zur Heizung von Fahrerkabinen u. ä. mit elektrischen Widerstandsheizkörpern und Kühlung durch Kaltdampfmaschinen der Jahresenergieverbrauch gesenkt werden kann, und der Wirkungsgrad der Anlage verbessert wird.
Weiterhin scheidet die Umweltbelastung durch Entfall von ozonabbauenden Kältemitteln und nicht vorhandenes direktes Treibhauspotential aus, und das indirekte Treibhauspotential wird reduziert.

Die Erfindung wird nachfolgend anhand von Ausführungsbeispielen näher erläutert.
In der Zeichnung zeigt die
- Figur 1: Schaltung für das Kühlen eines Raumes
- Figur 2: Schaltung für das Heizen eines Raumes.

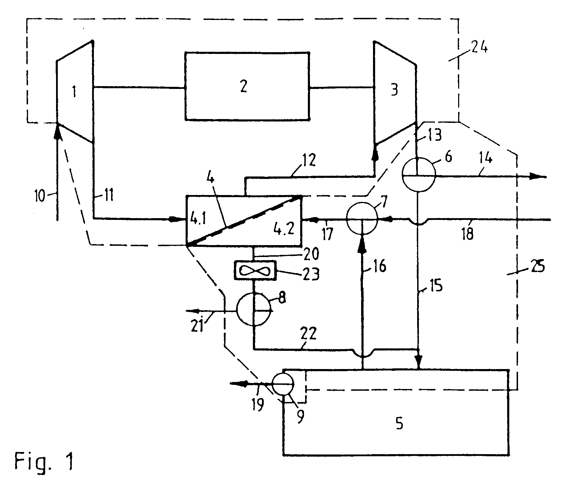

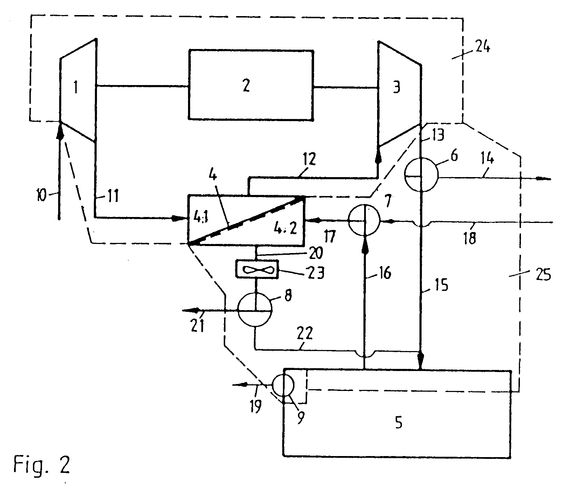

In den Figuren bedeuten der Raum 24 die Prozeßluftseite und der Raum 25 die Luftbehandlerseite.
Die Anlage besteht aus einer Turbine 1, die über eine gemeinsame Welle mit einem Motor 2 und einem Verdichter 3 verbunden ist. Weiterhin ist ein Wärmeübertrager 4 mit einer Prozeßseite 4.1 und einer Luftbehandlerseite 4.2 zum Kühlen des zu klimatisierenden Raumes 5 vorgesehen. Die einzelnen Elemente sind durch Rohrleitungen verbunden, die zum Umschalten von Kühlen auf Heizen entsprechende Ventile enthalten.
Beim Kühlen nach Figur 1 wird die aus der Umgebung über den Stutzen 9 in die Turbine 1 eintretende Luft über die Leitung 11, den Wärmeübertrager 4 und die Leitung 12 dem Verdichter 3 zugeführt. Die verdichtete warme Luft tritt über die Leitung 13, das Umschaltventil 6 und den Stutzen 14 wieder in die Umgebung aus.
Durch die Entspannung der Prozeßluft aus dem Umgebungszustand in den Unterdruckbereich in der Turbine 1 kühlt sich die Luft auf eine Temperatur unterhalb der Umgebungstemperatur ab. Im Wärmeübertrager 4 wird das Temperaturgefälle zwischen der Luft auf der Luftbehandlerseite 4.2 und der Prozeßluftseite 4.1 genutzt, um die Zuluft für die Kabine 5, die vom Lüfter 23 gefördert wird, zu kühlen und der Kabine 5 über die Leitung 22 zuzuführen.
Entsprechend dem im Ventil 7 zugemischten Frischluftanteil aus der Leitung 18 tritt die Überschußluft aus der Kabine über das Ventil 9 und die Leitung 19 in die Umgebung aus.
Für den Heizprozeß nach Figur 2 erfolgt eine Umschaltung der Klappen 6, 7, 8 und 9, so daß die kalte Prozeßluft aus der Turbine 1 durch die Funktionsänderung des Wärmeübertragers 4 in die Wirksamkeit als Regenerator durch die warme Abluft aus der Kabine, die über die Leitungen 16 und 17 auf die Luftbehandlerseite 4.2 des Wärmeübertragers gelangt, erwärmt wird. Durch die nachfolgende Verdichtung im Verdichter 3 steigt ihr Temperaturniveau weiter an, und sie gelangt über die Leitung 13, das Ventil 6 und die Leitung 15 als warme Zuluft in die Kabine 5 und beheizt diese.

## Patentansprüche

1. Kombinierter Kaltluftmaschinenkühl- und -heizprozeß zum Klimatisieren eines Raumes mit einem offenen Arbeitsprozeß im Unterdruckbereich
dadurch gekennzeichnet, daß
während des Heizprozesses die Ventile (6), (7), (8) und (9) umgeschaltet werden und der im Kühlprozeß als Nutzwärmeübertrager für den indirekten Kühlluftkreislauf dienende Wärmeübertrager (4) als regenerativer Wärmeübertrager arbeitet, wobei die Prozeßluft vollständig als Frischluft über die Leitung (13), das Ventil (6) und die Leitung (15) direkt die Kabine (5) beheizt, und die Fortluft über die Leitungen (16), das Ventil (7) und die Leitung (17) der Wärmeübertragerseite (4.2) des Wärmeübertragers (4) zugeführt wird und ihren Wärmeinhalt an die Prozeßluft auf der Wärmeübertragerseite (4.1) des Wärmeübertragers (4) abgibt.

2. Verfahren nach Anspruch 1 dadurch gekennzeichnet, daß zum Vorheizen der kalten Kabine gegenüber dem Normalbetrieb die maximale Leistungsstufe eingestellt wird.

3. Vorrichtung zur Durchführung des Verfahrens nach Anspruch 1, bestehend aus einer kombinierten Turbinen-Motor-Verdichtereinheit (1), (2), (3) mit zwischengeschaltetem Wärmeübertrager (4) für die Kühlung der Zuluft des zu klimatisierenden Raumes (5) und entsprechenden Verbindungsleitungen,
dadurch gekennzeichnet, daß zwischen
Verdichteraustritt (13) und Wärmeübertragereintritt (17) die Umschaltventile (6) und (7) und die Verbindungsleitung (15) zwischen den Leitungen (13) und (22) angeordnet sind.
